# EUROPEAN PATENT SPECIFICATION

(11) **EP 4 446 917 B1**
(45) Date of publication and mention of the grant of the patent: **03.12.2025**
(21) Application number: 23216467.3
(22) Date of filing: 13.12.2023
(51) Int. Cl.: H04L 9/32, G06F 21/57, H04L 9/00, G06F 21/64

(54) **NFT-BASED FIRMWARE MANAGEMENT**
FIRMWARE-VERWALTUNG AUF NFT-BASIS
GESTION DE MICROLOGICIEL BASÉE SUR NFT

(30) Priority: 12.04.2023 WO PCT/CN2023/087750; 28.07.2023 US 202318360857
(43) Date of publication of application: 16.10.2024
(73) Proprietor: INTEL Corporation, Santa Clara, CA 95054 (US)
(72) Inventor: HAN, Ke, Shanghai, 200241 (CN); YE, Weize, Shanghai, 201114 (CN); YUE, Ling, Shanghai, 200241 (CN)
(74) Representative: 2SPL Patentanwälte PartG mbB

(56) References cited:
- WO-A1-2022/214690
- WO-A1-2022/240871
- US-A1- 2023 056 827
- US-A1- 2023 102 889

## Description

### Background

In many cases, a model being used for managing device firmware uses a top-down topology. A signing server is used to sign the firmware (using a private key). An update server is used to distribute the firmware to devices, and to do attestation to verify device identity (if required). Each device is doing authentication of its own firmware (using a corresponding public key), using its own root of trust.

Patent literature US 2023/056827 A1 discloses a method and device for non-fungible token (NFT)-based software. A method of running the NFT-based software performed on the device includes: running the NFT-based software in response to an execution request for executing the NFT-based software; loading NFT metadata including identification information indicating the NFT-based software, identification information indicating an owner of the NFT-based software, and specified engraving data, in response to the execution request; and outputting the engraving data included in the NFT metadata based on an event occurring as the NFT-based software runs.

### Brief description of the Figures

Some examples of apparatuses and/or methods will be described in the following by way of example only, and with reference to the accompanying figures, in which:
- Fig. 1a: shows a flow chart of an example of a method for a client device;
- Fig. 1b: shows a schematic diagram of an example of an apparatus or device for a client device, of a client device comprising such an apparatus or device, and of a system;
- Fig. 2a: shows a flow chart of an example of a method for a firmware management device;
- Fig. 2b: shows a schematic diagram of an example of an apparatus or device for a firmware management device, of a firmware management device comprising such an apparatus or device, and of a system;
- Fig. 3: shows a schematic diagram of an example of a top-down topology for firmware management;
- Fig. 4: shows a schematic diagram of an example of a decentralized topology for firmware management;
- Fig. 5: shows another schematic diagram of an example of a decentralized topology for firmware management;
- Fig. 6: shows a flow diagram of an example of a device firmware boot flow;
- Fig. 7: shows a flow diagram of an example of a firmware update flow;
- Fig. 8: shows a flow diagram of an example of a device provisioning flow;
- Fig. 9: shows a flow diagram of an example of a device attestation flow;
- Fig. 10: shows a block diagram of an electronic apparatus;
- Fig. 11: shows a block diagram of a computing device; and
- Fig. 12: shows a block diagram of a computing system.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

In the following description, specific details are set forth, but examples of the technologies described herein may be practiced without these specific details. Well-known circuits, structures, and techniques have not been shown in detail to avoid obscuring an understanding of this description. "An example/example," "various examples/examples," "some examples/examples," and the like may include features, structures, or characteristics, but not every example necessarily includes the particular features, structures, or characteristics.

Some examples may have some, all, or none of the features described for other examples. "First," "second," "third," and the like describe a common element and indicate different instances of like elements being referred to. Such adjectives do not imply element item so described must be in a given sequence, either temporally or spatially, in ranking, or any other manner. "Connected" may indicate elements are in direct physical or electrical contact with each other and "coupled" may indicate elements co-operate or interact with each other, but they may or may not be in direct physical or electrical contact.

As used herein, the terms "operating", "executing", or "running" as they pertain to software or firmware in relation to a system, device, platform, or resource are used interchangeably and can refer to software or firmware stored in one or more computer-readable storage media accessible by the system, device, platform, or resource, even though the instructions contained in the software or firmware are not actively being executed by the system, device, platform, or resource.

The description may use the phrases "in an example/example," "in examples/examples," "in some examples/examples," and/or "in various examples/examples," each of which may refer to one or more of the same or different examples. Furthermore, the terms "comprising," "including," "having," and the like, as used with respect to examples of the present disclosure, are synonymous.

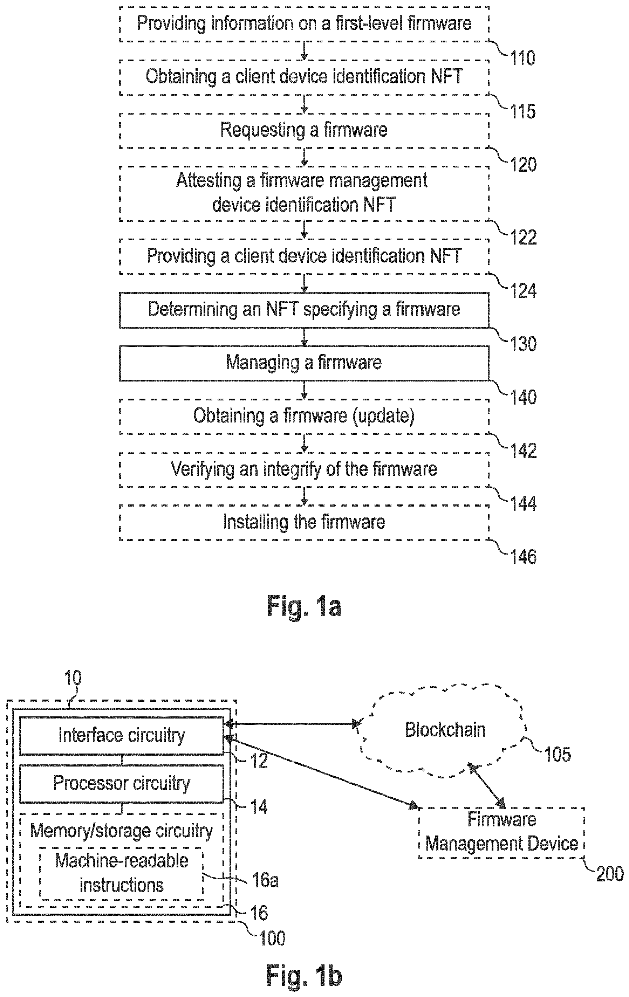

Fig. 1a shows a flow chart of an example of a method for a client device 100 (shown in Fig. 1b). The method comprises determining 130, on a blockchain 105 (shown in Fig. 1b), a non-fungible token NFT specifying a firmware for the client device. The client device is set as owner of the NFT. The method comprises managing 140 a firmware of the client device based on the firmware specified by the NFT. For example, the method may be a computer-implemented method, e.g., a method being performed by a computer system such as a client device 100 (or apparatus 10 or device 10 of client device 100) shown in Fig. 1b. For example, the client device 100 may be any kind of system that supports multiple levels of firmware, e.g., a computer system, a mobile device, a smartphone, a wearable, a vehicle, a car, a drone etc.

Fig. 1b shows a schematic diagram of an example of an apparatus 10 or device 10 for the client device 100. The apparatus 10 comprises circuitry to provide the functionality of the apparatus 10. For example, the circuitry of the apparatus 10 may be configured to provide the functionality of the apparatus 10. For example, the apparatus 10 of Fig. 1b comprises interface circuitry 12, processor circuitry 14 and (optional) memory/storage circuitry 16. For example, the processor circuitry 14 may be coupled with the interface circuitry 12 and with the memory/storage circuitry 16. For example, the processor circuitry 14 may provide the functionality of the apparatus, in conjunction with the interface circuitry 12 (for communicating with another computer system or entity, such as nodes of a blockchain 105, or such as a firmware management device 200 (or apparatus 20/device 20 thereof)), and the memory/storage circuitry 16 (for storing information, such as machine-readable instructions). Likewise, the device 10 may comprise means for providing the functionality of the device 10. For example, the means may be configured to provide the functionality of the device 10. The components of the device 10 are defined as component means, which may correspond to, or implemented by, the respective structural components of the apparatus 10. For example, the device 10 of Fig. 1b comprises means for processing 14, which may correspond to or be implemented by the processor circuitry 14, means for communicating 12, which may correspond to or be implemented by the interface circuitry 12, (optional) means for storing information 16, which may correspond to or be implemented by the memory or storage circuitry 16. In general, the functionality of the processor circuitry 14 or means for processing 14 may be implemented by the processor circuitry 14 or means for processing 14 executing machine-readable instructions. Accordingly, any feature ascribed to the processor circuitry 14 or means for processing 14 may be defined by one or more instructions of a plurality of machine-readable instructions. The apparatus 10 or device 10 may comprise the machine-readable instructions 16a, e.g., within the memory or storage circuitry 16 or means for storing information 16, as shown in Fig. 1b. The processor circuitry 14 or means for processing 14 is to perform the method of Fig. 1a, e.g., in conjunction with the interface circuitry 12, and the memory/storage circuitry 16.

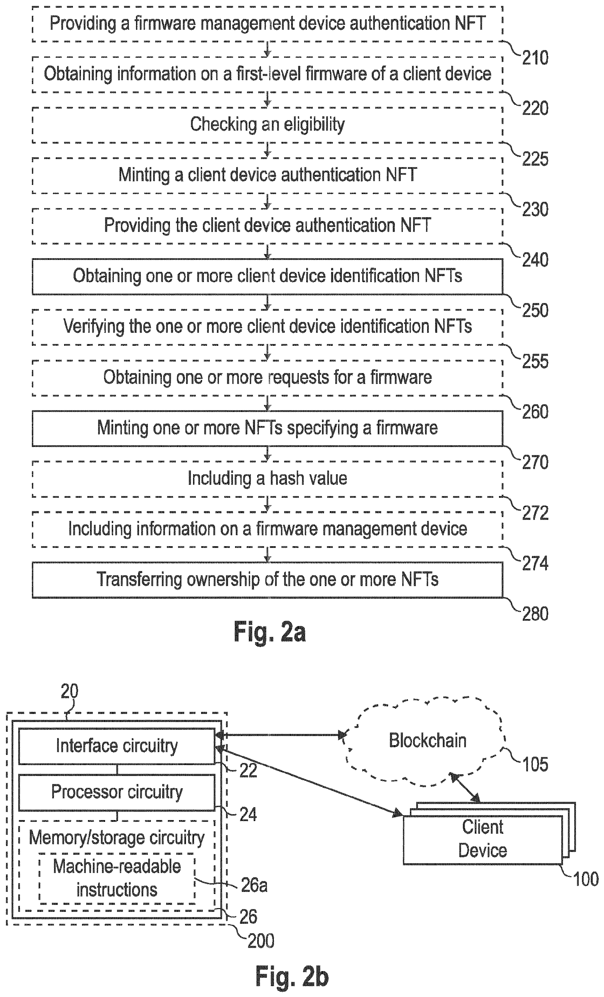

Fig. 1b further shows the client device 100 comprising the apparatus 10 or device 10. Fig. 1b further shows a system comprising the apparatus 10 / device 10 (or client device 100) and the firmware management device 200 (which will be discussed in connection with Figs. 2a and 2b).

Various examples of the present disclosure relate to the management of client device firmware, and in particular to the management of client device firmware with the help of client device-specific Non-Fungible Tokens (NFTs). NFTs are a type of digital asset that represents ownership or proof of authenticity of a unique item. In many cases, NFTs are used to proof ownership of digital artifacts, such as artwork, music, videos, collectibles, or virtual real estate, using blockchain technology. Unlike cryptocurrencies like Bitcoin or Ethereum, which are fungible and can be exchanged on a one-to-one basis, NFTs are unique and cannot be exchanged on a like-for-like basis (i.e., they are non-fungible).

In the proposed concept, NFTs are used for firmware management purposes. They are primarily used for two purposes - to represent the identity of the concerned parties (i.e., the client device 100 and the firmware management device 200) via their respective unmodifiable base level firmware or software, and to assign firmware updates to client devices.

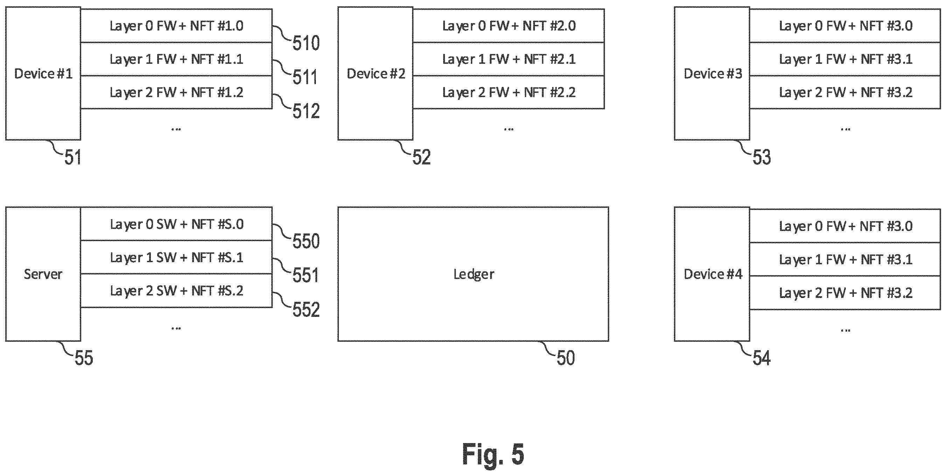

In the proposed concept, this is done by having a multi-layer firmware or software architecture. For example, the client device 100 may comprise a first-level firmware (layer 0 firmware in Figs. 5 to 9) that is unmodifiable. In addition to the first-level firmware, second level firmware can be installed (as firmware updates or firmware extensions), on top of the first-level firmware. For example, the first level firmware may be used for managing at least one of a blockchain-based firmware update process and a blockchain-based firmware verification process. A firmware update may be installed 146 as a second level firmware in addition to the first-level firmware. For example, a separate NFT may be minted for each level of firmware, e.g., each firmware installed on top of the first-level firmware.

Some examples of the present disclosure further provide a client device, comprising processor circuitry or means for processing (e.g., of apparatus 10 or device 10) to load a first level firmware for managing at least one of a blockchain-based firmware update process and a blockchain-based firmware verification process, and to load a second level firmware in addition to the first level firmware, the second level firmware being based on at least one firmware update. For example, the client device may further comprise at least one interface, machine-readable instructions, with the processor circuitry executing the machine-readable instructions. For example, the client device may correspond to the client device 100 of Fig. 1b.

Similarly, as also shown in Figs. 5 to 9, the firmware management device 200 (denoted server in Figs. 5 to 9) comprises a first-level software that is unmodifiable, and second-level software that is installed on top of the first-level software.

The respective first-level firmware and first-level software are unmodifiable and can be used as part of an identification of the respective device. For this purposes, NFTs are minted for the first-level firmware of the client device 100 and for the first-level software of the firmware management device, with the purpose of using the NFTs to represent the respective devices.

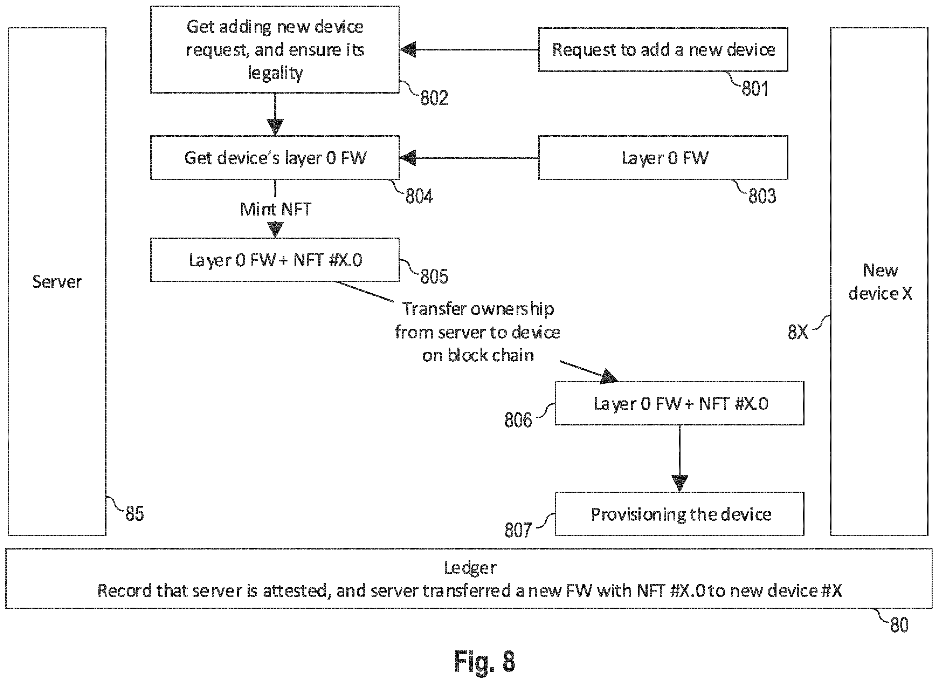

For the firmware management device, the minting of the firmware management device identification NFT is done during setup of the NFT-based decentralized firmware management scheme. For the client device, this is done during device provisioning. For example, as shown in Fig. 1a, the method may comprise, for provisioning the client device for future firmware updates, providing 110 information on the first-level firmware to the firmware management device 200 (e.g., a hash of the first-level firmware), and obtaining 115 a client device identification NFT from the firmware management device, with the client device being set as owner of the client device identification NFT. The client device identification NFT is based on the first-level firmware of the device (and, for example, based on an identity of the client device.) The client device identification NFT may subsequently be used to identify the client device towards the firmware management device 200, such that the firmware management device 200 assigns any firmware (updates) to the client device based on the client device identification NFT. Further details with respect to client device provisioning are given in connection with Fig. 8, for example.

In some examples, firmware (e.g., firmware updates, firmware extensions etc.) may be assigned and provided automatically (by minting an NFT) from the device management device 200 to the client device 100, e.g., after provisioning of the client device 100. In some other examples, the firmware (update, extension) is provided in response to a request by the client device 100. For example, the method may comprise requesting 120 the firmware from the firmware management device 200. In this case, the NFT specifying the firmware may be minted by the firmware management device in response to the request. For example, the NFT may specify a firmware update (or firmware extension), e.g., a second-level firmware.

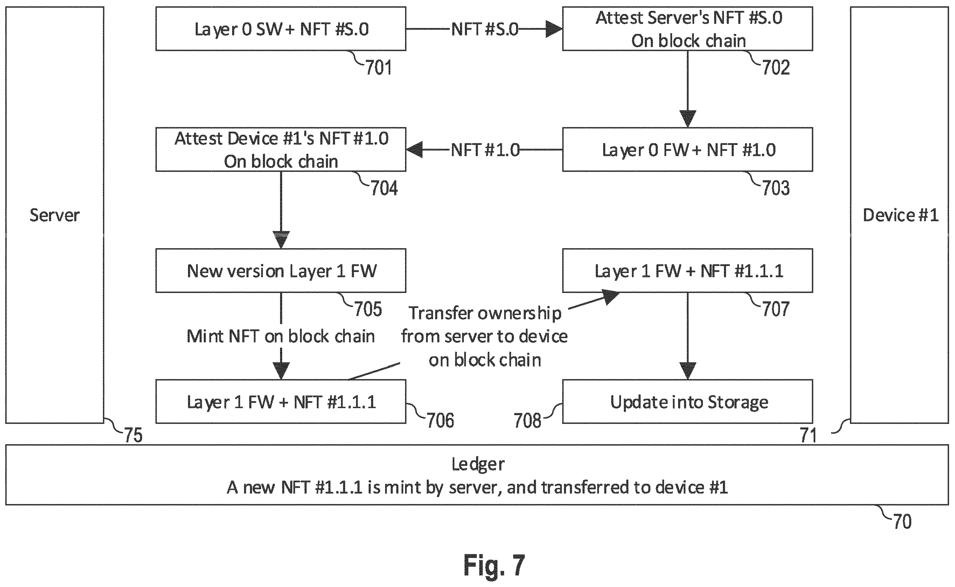

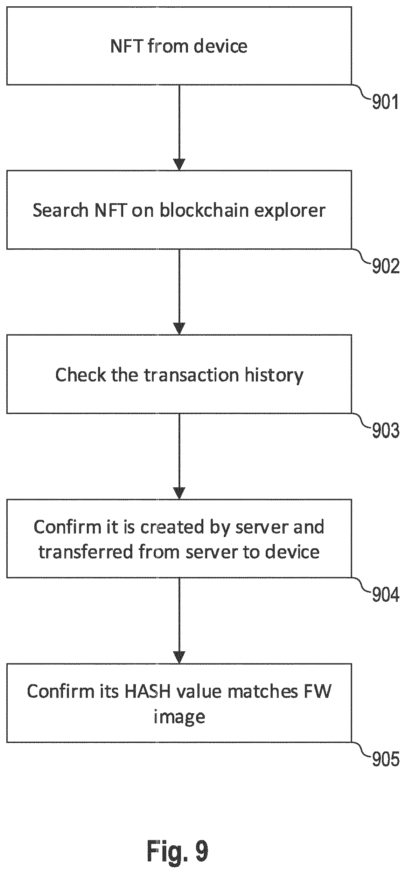

In Fig. 7, an example of a firmware provisioning / firmware update flow is shown. This flow does not only include the minting of the NFT specifying the firmware, but also a mutual attestation process (introduced in more detail in connection with Fig. 9). The process may start with the server providing the firmware management device identification NFT and the client device performing attestation on the firmware management device identification NFT. For example, the act of requesting the firmware update may comprise attesting 122 a firmware management device identification NFT of the firmware management device using the block chain (e.g., as discussed in connection with Fig. 9). This firmware management device identification NFT can be checked, on the blockchain, to confirm the identity of the firmware management device. For example, the firmware management device may be pre-defined for the client device as being allowed to provide firmware, e.g., during manufacturing of the client device. For example, the client device may comprise a record of identities of one or more firmware management devices being allowed to provide firmware for the client device. If attestation of the firmware management device identification NFT is successful. The act of requesting the firmware update may comprise providing 124 the client device identification NFT of the client device to the firmware management device (after having attested the firmware management device identification NFT).

Based on the request, e.g., using the client device identification NFT, the firmware management device mints an NFT for the firmware (update, extension) being requested, and stores the NFT in the blockchain. The client device then determines 130 (e.g., identifies, finds) the NFT specifying the firmware on the blockchain. This NFT specifying the firmware is specific to the client device, as the client device (as node participating in the blockchain (network)) is set as owner of the NFT. In other words, if a firmware update is being provided to multiple client devices, a separate NFT is minted for each of the client devices. Therefore, the client device can look, on the blockchain, for NFTs that specify the client device as owner to identify the firmware to be used by the client device. The client devices then manages 140 the firmware of the client device based on the firmware specified by the NFT.

In the present context, managing 140 the firmware may include different operations and functionalities, depending on whether the firmware being specified is already installed or not. If the firmware is installed (e.g., as second-level firmware), the NFT may be used to verify the integrity of the firmware, e.g., during a boot process of the client device. In other words, the integrity of the firmware may be verified 144 as part of a boot process of the client device. If the firmware is not (yet) installed, it may be verified prior to installing, e.g., during a firmware update process. For example, if the NFT specifies a firmware update, the method may comprise obtaining 142 the firmware update specified by the NFT and installing 146 the firmware update on the client device. The integrity of the firmware update may be verified 144 prior to installing 146 the firmware update on the client device.

The firmware verification process has two aspects: It is used to verify that the firmware has been provided by a trusted party (i.e., the firmware management device 200), and it is used to verify that the firmware has not been tempered with. In both cases, the integrity is verified based on information included in the NFT. In other words, the method may comprise verifying 144 an integrity of the firmware based on information included in the NFT. In the former case, the NFT may comprise information on a firmware management device 200 having minted the NFT. The method may comprise verifying 144 the integrity of the firmware by verifying an integrity of the firmware management device having minted the NFT using the blockchain. This information on the firmware management device 200 having minted the NFT can be verified based on a transaction history of the NFT that is stored on the blockchain (e.g., as illustrated in connection with Fig. 9). If the firmware management device 200 having minted the NFT is pre-defined for the client device as being allowed to provide firmware, verification of (this aspect of) the firmware may be deemed successful.

In the latter case, the NFT may comprise a hash value or a cryptographic signature of the firmware. The hash value, and/or the cryptographic signature (being based on the hash value of the firmware) may be used to verify the integrity of the firmware (update). In other words, the method may comprise verifying 144 the integrity of the firmware update based on the hash value or cryptographic signature included in the NFT.

The NFTs may not only be used by the client devices themselves (for the purpose of verifying the firmware) but also by other devices that with to communicate or interact with the client device. For example, in an autonomous driving scenario, the NFTs specifying a firmware can be used, by another vehicle, to verify that an autonomous vehicle has a sufficiently advanced firmware that allows the vehicle to safely interact and/or cooperate with the autonomous vehicle.

The interface circuitry 12 or means for communicating 12 may correspond to one or more inputs and/or outputs for receiving and/or transmitting information, which may be in digital (bit) values according to a specified code, within a module, between modules or between modules of different entities. For example, the interface circuitry 12 or means for communicating 12 may comprise circuitry configured to receive and/or transmit information.

For example, the processor circuitry 14 or means for processing 14 may be implemented using one or more processing units, one or more processing devices, any means for processing, such as a processor, a computer or a programmable hardware component being operable with accordingly adapted software. In other words, the described function of the processor circuitry 14 or means for processing may as well be implemented in software, which is then executed on one or more programmable hardware components. Such hardware components may comprise a general-purpose processor, a Digital Signal Processor (DSP), a micro-controller, etc.

For example, the memory or storage circuitry 16 or means for storing information 16 may a volatile memory, e.g., random access memory, such as dynamic random-access memory (DRAM), and/or comprise at least one element of the group of a computer readable storage medium, such as a magnetic or optical storage medium, e.g., a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

More details and aspects of the method, apparatus 10, device 10, client device 100 and/or system are mentioned in connection with the proposed concept, or one or more examples described above or below (e.g., Fig. 2a to 12). The method, apparatus 10, device 10, client device 100 and/or system may comprise one or more additional optional features corresponding to one or more aspects of the proposed concept, or one or more examples described above or below.

Fig. 2a shows a flow chart of an example of a method for a firmware management device 200, e.g., the firmware management device 200 also shown in Fig. 1b. The method comprises obtaining 250 one or more client device identification Non-Fungible Tokens NFTs of one or more client devices. The method comprises minting 270 one or more NFTs specifying a firmware on a blockchain. The method further comprises transferring 280 ownership of the one or more NFTs specifying a firmware to the one or more client devices based on an identity of the one or more client devices included in the one or more client device identification NFTs.

For example, the method may be a computer-implemented method, e.g., a method being performed by a computer system such as a firmware management device 200 (or apparatus 20 or device 20 of firmware management device 200) shown in Fig. 2b. For example, firmware management device 200 may be a computer system, such as a server, participating as node of a blockchain.

Fig. 2b shows a schematic diagram of an example of an apparatus 20 or device 20 for the firmware management device 200. The apparatus 20 comprises circuitry to provide the functionality of the apparatus 20. For example, the circuitry of the apparatus 20 may be configured to provide the functionality of the apparatus 20. For example, the apparatus 20 of Fig. 2b comprises interface circuitry 22, processor circuitry 24 and (optional) memory/storage circuitry 26. For example, the processor circuitry 24 may be coupled with the interface circuitry 22 and with the memory/storage circuitry 26. For example, the processor circuitry 24 may provide the functionality of the apparatus, in conjunction with the interface circuitry 22 (for communicating with another computer system or entity, such as nodes of a blockchain 105, or such as a one or more client devices 100 (or apparatus 10/device 10 thereof)), and the memory/storage circuitry 26 (for storing information, such as machine-readable instructions). Likewise, the device 20 may comprise means for providing the functionality of the device 20. For example, the means may be configured to provide the functionality of the device 20. The components of the device 20 are defined as component means, which may correspond to, or implemented by, the respective structural components of the apparatus 20. For example, the device 20 of Fig. 2b comprises means for processing 24, which may correspond to or be implemented by the processor circuitry 24, means for communicating 22, which may correspond to or be implemented by the interface circuitry 22, (optional) means for storing information 26, which may correspond to or be implemented by the memory or storage circuitry 26. In general, the functionality of the processor circuitry 24 or means for processing 24 may be implemented by the processor circuitry 24 or means for processing 24 executing machine-readable instructions. Accordingly, any feature ascribed to the processor circuitry 24 or means for processing 24 may be defined by one or more instructions of a plurality of machine-readable instructions. The apparatus 20 or device 20 may comprise the machine-readable instructions 26a, e.g., within the memory or storage circuitry 26 or means for storing information 26, as shown in Fig. 2b. The processor circuitry 24 or means for processing 24 is to perform the method of Fig. 2a, e.g., in conjunction with the interface circuitry 22, and the memory/storage circuitry 26.

Fig. 2b further shows the client device 200 comprising the apparatus 20 or device 20. Fig. 2b further shows a system comprising the apparatus 20 / device 20 (or client device 200) and the firmware management device 200 (which will be discussed in connection with Figs. 2a and 2b).

While Figs. 1a and 1b relate to the functionality of the client device 100, Figs. 2a and 2b relate to the corresponding firmware management device 200. In the proposed concept, the firmware management device 200 has the primary purpose of minting NFTs for various firmware, such as firmware updates and first-level firmware of client devices, for the purposes of client device provisioning and verification of firmware.

Minting an NFT refers to the process of creating a unique token known as a non-fungible token (NFT) on a blockchain network. When an NFT is minted, a record of its existence and ownership is stored on the blockchain, providing a verifiable and immutable proof of authenticity and ownership. To mint an NFT, a smart contract system is often used, which defines the properties and attributes of the NFT. The firmware management device 200 may incur a transaction fee on the blockchain network used for minting.

As outlined in connection with Figs. 1a, 1b and 7, the proposed concept is based on the mutual attestation-based trust between the client device(s) 100 and the firmware management device 200. For this purpose, the firmware management device 200 provides a firmware management device identification NFT, which is linked to the first-level software of the firmware management device 200, to the respective client devices. In various examples, the method may comprise providing 210 a firmware management device identification NFT of the firmware management device to the one or more client devices. This firmware management device identification NFT of the firmware management devices may be used by the client device(s) to attest the authenticity of the first-level software of the firmware management device 200 on the blockchain 105.

If a client device wants be use the services of the firmware management device 200, it may be provisioned for the services of the firmware management device. For example, the method may comprise, for provisioning a client device for future firmware updates, obtaining 220 information on a first-level firmware from the client device to be provisioned (e.g., a hash of the first-level firmware). The firmware management device 200 may then check whether the client device to be provisioned is eligible for using the service(s) provided by the firmware management device 200 (e.g., firmware updates). This may be done off blockchain, e.g., using certificates, or performing the eligibility check face-to-face or in a controlled manufacturing environment. In other words, the method may comprise checking 225 an eligibility of the client device to be provisioned based on information obtained from outside the blockchain. The method may comprise minting 230 a client device identification NFT for the client device to be provisioned based on the information on the first-level firmware (e.g., based on the hash of the first-level firmware), such that the trustworthiness and/or identity of the client device to be provisioned by comparing the (immutable) first-level firmware to the hash included in the client device identification NFT. The client device to be provisioned may be set as owner of the client device identification NFT on the blockchain, such that the client device can be attested via the blockchain. The method may comprise providing 240 the client device identification NFT to the client device to be provisioned, e.g., by storing the client device identification NFT on the blockchain.

The client device identification NFTs may then be used for requesting firmware (updates, extensions) from the firmware management device 200. The method comprise obtaining 250 the one or more client device identification Non-Fungible Tokens NFTs of one or more client devices. The one or more client device identification NFTs may then be verified 255 using the blockchain, e.g., using the techniques discussed in connection with Fig. 9.

As shown in connection with Fig. 7, the firmware management device may obtain (e.g., receives) a client device identification NFT from a client device as part of a request for a firmware (update, extension). For example, the method may comprise obtaining 260 one or more requests for the firmware from the one or more client devices (which may comprise the one or more client device identification NFTs). The one or more NFTs may be minted 270 in response to the one or more requests.

Based on the received client device identification NFTs (and, for example, in response to the one or more requests), the firmware management device 200 mints the one or more NFTs specifying the firmware on the blockchain 105, e.g., using a corresponding smart contract. As NFTs are unique for each combination of client device and firmware (update), a separate NFT may be minted for each of the one or more client devices. As part of the minting of the NFT(s), the firmware management device 200 may include the information necessary for verifying the firmware in the NFT specifying the firmware - the information on the firmware management device having minted the NFT, and/or the hash value or cryptographic signature of the firmware. In other words, the method may comprise including 272 a hash value or a cryptographic signature of the firmware in the one or more NFTs specifying the firmware. For example, the method may comprise generating the hash value or cryptographic signature based on the firmware, e.g., using a suitable hashing and/or cryptographic signing algorithm. The method may comprise including 274 information on the firmware management device having minted the NFT in the one or more NFTs specifying the firmware.

The respective NFTs may then be assigned to the respective client device(s), by transferring ownership of the NFTs to the respective client device(s) on the blockchain. In other words, the method comprises transferring 280 ownership of the one or more NFTs specifying a firmware to the one or more client devices based on an identity of the one or more client devices included in the one or more client device identification NFTs.

The firmware (update, extension) may also be provided by the firmware management device 200, e.g., via a web server of the firmware management device 200. Alternatively, the firmware may be provided by a different device, e.g., a web server, or via a content delivery network (CDN). For example, the same firmware, referenced by different NFTs, may be provided to different client devices.

The interface circuitry 22 or means for communicating 22 may correspond to one or more inputs and/or outputs for receiving and/or transmitting information, which may be in digital (bit) values according to a specified code, within a module, between modules or between modules of different entities. For example, the interface circuitry 22 or means for communicating 22 may comprise circuitry configured to receive and/or transmit information.

For example, the processor circuitry 24 or means for processing 24 may be implemented using one or more processing units, one or more processing devices, any means for processing, such as a processor, a computer or a programmable hardware component being operable with accordingly adapted software. In other words, the described function of the processor circuitry 24 or means for processing may as well be implemented in software, which is then executed on one or more programmable hardware components. Such hardware components may comprise a general-purpose processor, a Digital Signal Processor (DSP), a micro-controller, etc.

For example, the memory or storage circuitry 26 or means for storing information 26 may a volatile memory, e.g., random access memory, such as dynamic random-access memory (DRAM), and/or comprise at least one element of the group of a computer readable storage medium, such as a magnetic or optical storage medium, e.g., a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

For example, the firmware management device 200 may be one of a workstation computer system, a server computer system, a personal computer system, a portable computer system, a mobile device, a smartphone, a tablet computer, or a laptop computer.

More details and aspects of the method, apparatus 20, device 20, computer system 200 and/or system are mentioned in connection with the proposed concept, or one or more examples described above or below (e.g., Fig. 2a to 5). The method, apparatus 20, device 20, computer system 200 and/or system may comprise one or more additional optional features corresponding to one or more aspects of the proposed concept, or one or more examples described above or below.

Various examples of the present disclosure relate to an NFT based firmware (FW) management model.

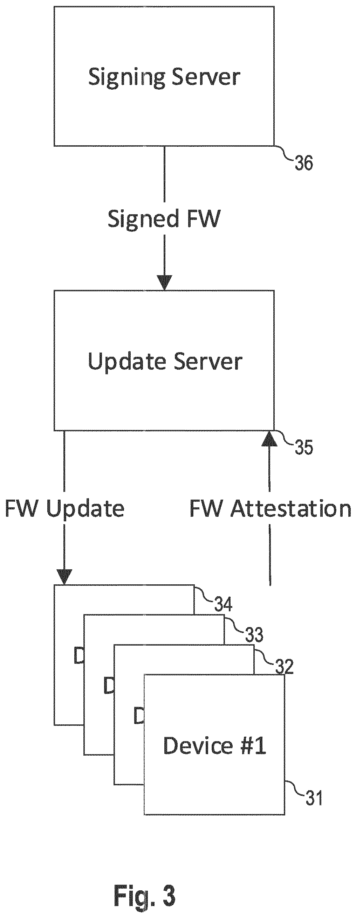

In many cases, a device firmware management model uses a top-down topology, as shown in Fig. 3. Fig. 3 shows a schematic diagram of an example of a top-down topology for firmware management. In such a top-down topology, a signing server 36 is responsible to sign the firmware (with a private key). An update server 35 is responsible for distributing the firmware to devices 31-34 and performing attestation to verify device identity (if required). Each device 31-34 is performing authentication of its own firmware (with a public key) with its own root of trust.

Such mechanisms being based on a top-down topology are widely used and are based on a fundamental assumption: the center of the topology, which is/are the signing and update server, will never be hacked. If the private key from the signing server is stolen, the whole system may fall apart, and every device may be broken. The center server of the firmware management is assumed to be invincible, but this assumption cannot be true in all circumstances, as both social engineering and human error can lead to the private key being leaked.

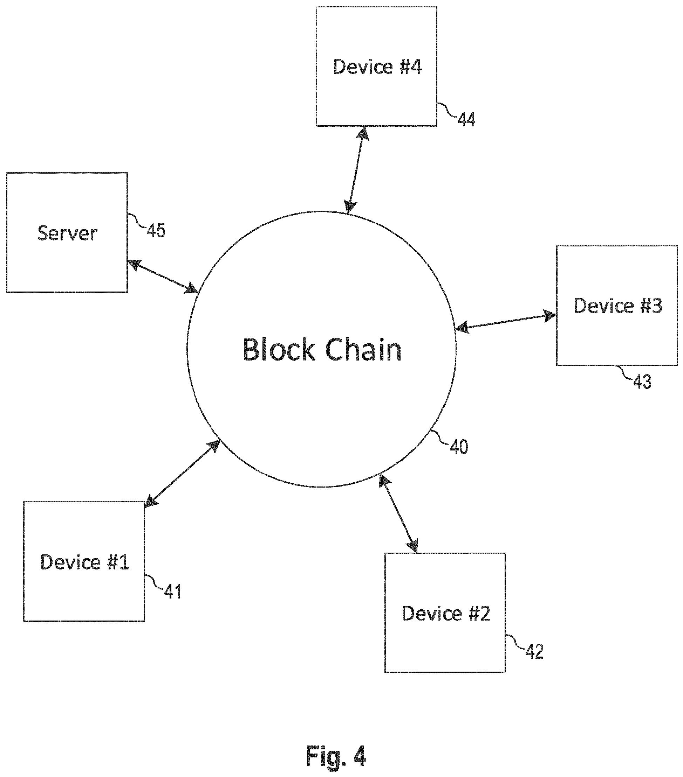

Various examples of the proposed concept seek to overcome the aforementioned flaw in the top-down firmware management model, by providing a decentralized, blockchain NFT technology-based firmware management model, as shown in Fig. 4. Fig. 4 shows a schematic diagram of an example of a decentralized topology for firmware management. In such a decentralized topology, the devices 41-44 and the server 45 are connected via a blockchain 40. Each layer firmware running on a device 41-44 has a unique NFT token. Moreover, the Server 45 also has its own NFT token for its software service. Firmware authentications are done on blockchain by verifying the firmware image with their respective NFT tokens. Firmware updates are done on blockchain by transferring a firmware's ownership with its NFT token from server 45 to device 41-44. Firmware attestations may also be done on block chain by verifying the running firmware using its NFT token.

In the decentralized topology, there is no center - the server 45 itself is a node in the block chain 40, just like other devices 41-44. There also is no fundamental asset - all firmware management activities, no matter on server or on device, including firmware creation, update, attestation, authentication may be done publicly on block chain, and firmware security may be guaranteed by the block chain, so there is no fundamental asset, like an image signing private key, whose exposure to an attacker will cause the whole system to fall apart.

On the flipside, such a decentralized firmware management model is more computationally expensive than the common top-down model, but in some cases with high valuable device (like autonomous driving vehicles), it may be extremely useful, and much more reliable. For example, in a system with autonomous driving vehicles, one autonomous driving vehicle (as client device) can start attestation on all the other surrounding vehicles, and ensure they are all on the same block chain network and can be fully trusted on the same road. Each autonomous driving vehicle may have its own NFT tagged unique firmware, which can only be used on itself. In effect, the NFT is working as its identifier (and attestable by others) in the system. A firmware update from a server may be implemented as a NFT transfer, which may also be attested by all the vehicles on the road. In effect, any illegal transfer may be spotted, and related vehicles may be put into a blacklist, and rejected by the system. Even when the server is down or hacked, the whole system is still working, except for the firmware update mechanism, until the server is back to normal, and passed attestation of the devices. There are also other usage scenarios as well, like robot groups, enterprise information technology managed computers, highly automatized weapons, etc.

In the following, the proposed decentralized firmware management approach is illustrated. Fig. 5 shows another schematic diagram of an example of a decentralized topology for firmware management. As shown in Fig. 5, each (client) device 51-54 has a layer 0 firmware which was transferred from the server 55 during device provisioning, which cannot be updated. Each device 51-55 has higher-layer firmware that is updatable by server 55. All firmware layers have an NFT to identify their respective uniqueness. The server 55 (e.g., one or multiple) has its own software layers with NFT on each layer software. The layer 0 with the NFT that is used in attestation and NFT creation is not expected to be updatable. The ledger 50 (i.e., blockchain) is used to record (all of) the NFT creation and transfer activities associated with this block chain.

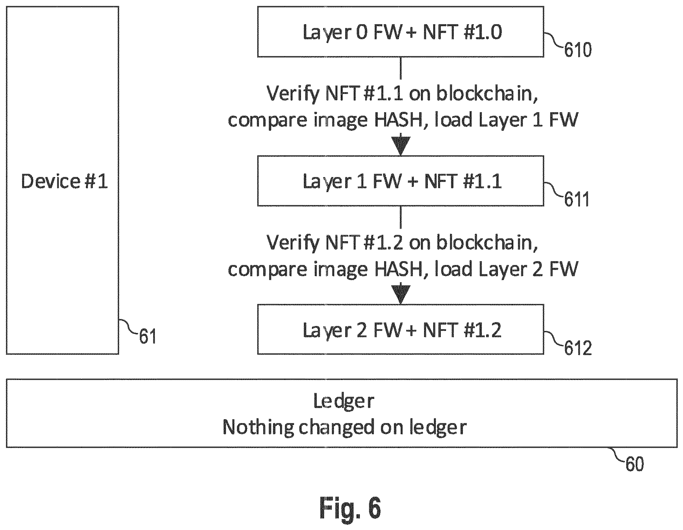

Fig. 6 shows a flow diagram of an example of a device firmware boot flow. Upon boot, layer 0 firmware 610 of device #1 61 is first to boot up. Then the layer 0 firmware verifies its firmware image's NFT based on the block chain and compare the firmware image hash with NFT record NFT #1.1. If the verification passes, the device 61 boots into the layer #1 firmware 611, and then verify its next stage firmware image's NFT based on the block chain. If the verification passes, the device 61 boots into the layer #2 firmware 612. Device boot does not generate any new record on the ledger, just query the record.

Fig. 7 shows a flow diagram of an example of a firmware update flow. During creation of a firmware update, an NFT is minted (e.g., a separate NFT for each client device). As a rule, only the layer 0 software in the server might be authorized to mint these NFTs. To perform a firmware update at a client device, an NFT transfer may be performed. The firmware update flow is shown in Fig. 7. First, server 75 and device 71 attest 702, 704 each other, by checking each other's NFT 701, 703 on blockchain 70. Then the server prepares the new firmware 705, and mints new NFT 706 for the firmware 705 on blockchain. The server provides the update with the new firmware 707 to the device, by transferring the NFT's ownership to the device. **In** this process, the block chain records that a new NFT is created by the server, and it is transferred to device into the ledger. The device then puts 708 the update into storage.

shows a flow diagram of an example of a device provisioning flow. Any new device that added to the blockchain may go through the process described by the device provision flow. in the device provisioning flow, a new device 8X has its layer 0 firmware hard coded, and provides a request 801 for provisioning (i.e., for adding a new device). The server receives 802 the request and confirms its legality. The new device provides 803 information on its layer 0 firmware (or the firmware itself) to the server, which receives 804 the information/firmware. The server mints an NFT 805 for the layer 0 firmware, and then transfer it 806 to the device, which the new device uses for provisioning 807 the device. In this process, the block chain may record that a new NFT is created by server, and it is transferred to the device into the ledger 80. This process is very similar as firmware update, but the key difference is that, in a firmware update, the firmware comes from server. In device provisioning, the layer 0 firmware comes from the device (it is hard coded in device already, just need a sign-off by the server with an NFT mint by the server. In device provisioning, the server may check the legality of the provisioning request from the device outside the blockchain. For example, a traditional authentication method may be used, like certification, or performing the legality/eligibility check face-to-face or in a controlled manufacturing environment, etc. The legality check may be the only operation outside the blockchain in the proposed concept.

Fig. 9 shows a flow diagram of an example of a device attestation flow. The attestation is to check the NFT transaction history on blockchain ledger. The key(s) to confirming whether a firmware is legal (i.e., authentic) or not may include confirming who created the NFT (should be the server). The server may have a unique account on blockchain, which is expected to be hard coded in device layer 0 firmware, which enables checking whether the creator of the NFT is the server or not can be verified from checking the ledger. The key(s) to confirming whether a firmware is legal or not may include confirming where the NFT comes from (should be server to device). The key(s) to confirming whether a firmware is legal or not may include whether the NFT record matches the firmware image hash.

A device can check the ledger using one of the following approaches. In the following, three approaches for checking the ledger are introduced. In a first approach, the device may check a blockchain explorer service, such as https://www.blockchain.com/explorer, and find out related NFT or transaction record. This approach is shown in Fig. 9, where the flow includes obtaining 901 the NFT, searching 902 the NFT on the blockchain explorer service, checking 903 the transaction history, confirming 904 that the NFT is created by the server and transferred from the server to the device, and confirming that the hash value matches the firmware image. This approach is a low-cost approach, but there is a risk that the web server may be hacked and is not trusted. In a second approach, a simple mitigation is to have multiple explorers operate in parallel and check the ledger on all of them. There is a lower likelihood of having all web servers hacked at the same time, this approach may be safer. The third approach is more computationally intensive, as it includes verifying the hash of each block on the block chain from the last one to previous, until the block with related transaction information is verified. This approach may be considered very safe, and theoretically no way to fake (due to the complexity of generating the block chain).

When the server is down, the functions "NFT minting" (for device provisioning/firmware update) and "NFT transfer" (for firmware update) may no longer be available. However, NFT verification is still working and can be trusted, hence firmware attestation is still working between device and device, and software attestation between device and server is still working, so the device can spot server being down. Furthermore, firmware booting still works.

Although it is no longer necessary, the firmware image can still contain its certificate or digital signature, along with NFT, just like many NFT art works today. In such way, the firmware management will be both top down and decentralized, with both approaches working in parallel, providing double the security of a single approach.

More details and aspects of the NFT based firmware management model are mentioned in connection with the proposed concept or one or more examples described above or below (e.g., Fig. 1a to 2b, 10 to 12). The NFT based firmware management model may comprise one or more additional optional features corresponding to one or more aspects of the proposed concept, or one or more examples described above or below.

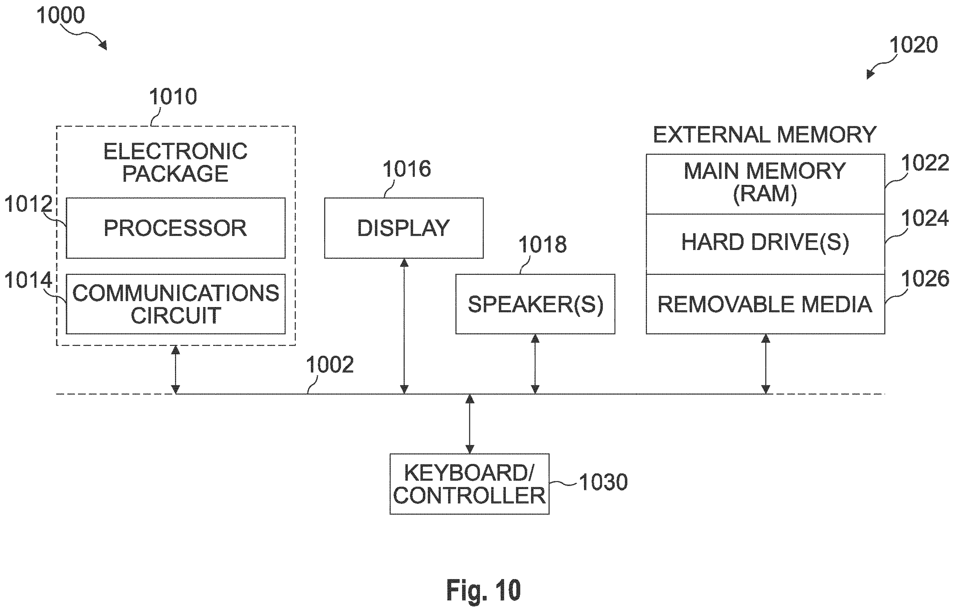

Fig. 10 is a block diagram of an electronic apparatus 1000 incorporating at least one electronic assembly and/or method described herein. Electronic apparatus 1000 is merely one example of an electronic apparatus in which forms of the electronic assemblies and/or methods described herein may be used. Examples of an electronic apparatus 1000 include, but are not limited to, personal computers, tablet computers, mobile telephones, game devices, MP3 or other digital music players, etc. In this example, electronic apparatus 1000 comprises a data processing system that includes a system bus 1002 to couple the various components of the electronic apparatus 1000. System bus 1002 provides communications links among the various components of the electronic apparatus 1000 and may be implemented as a single bus, as a combination of busses, or in any other suitable manner.

An electronic assembly 1010 as describe herein may be coupled to system bus 1002. The electronic assembly 1010 may include any circuit or combination of circuits. In one embodiment, the electronic assembly 1010 includes a processor 1012 which can be of any type. As used herein, "processor" means any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, or any other type of processor or processing circuit.

Other types of circuits that may be included in electronic assembly 1010 are a custom circuit, an application-specific integrated circuit (ASlC), or the like, such as, for example, one or more circuits (such as a communications circuit 1014) for use in wireless devices like mobile telephones, tablet computers, laptop computers, two-way radios, and similar electronic systems. The IC can perform any other type of function.

The electronic apparatus 1000 may also include an external memory 1020, which in turn may include one or more memory elements suitable to the particular application, such as a main memory 1022 in the form of random-access memory (RAM), one or more hard drives 1024, and/or one or more drives that handle removable media 1026 such as compact disks (CD), flash memory cards, digital video disk (DVD), and the like.

The electronic apparatus 1000 may also include a display device 1016, one or more speakers 1018, and a keyboard and/or controller 1030, which can include a mouse, trackball, touch screen, voice-recognition device, or any other device that permits a system user to input information into and receive information from the electronic apparatus 1000.

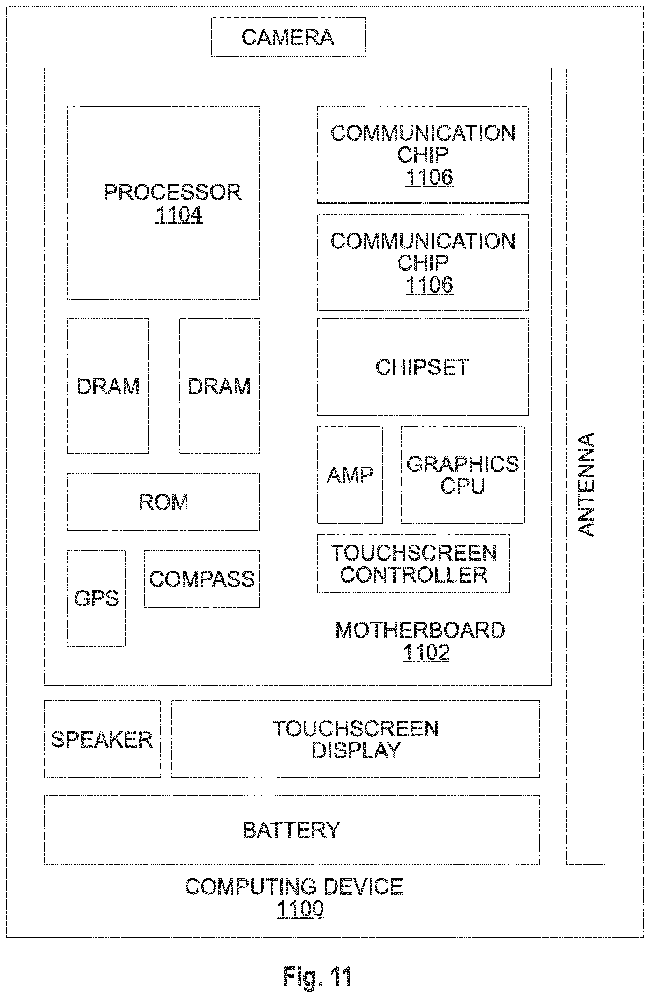

Fig. 11 illustrates a computing device 1100 in accordance with one implementation of the invention. The computing device 1100 houses a board 1102. The board 1102 may include a number of components, including but not limited to a processor 1104 and at least one communication chip 1106. The processor 1104 is physically and electrically coupled to the board 1102. In some implementations the at least one communication chip 1106 is also physically and electrically coupled to the board 1102. In further implementations, the communication chip 1106 is part of the processor 1104. Depending on its applications, computing device 1100 may include other components that may or may not be physically and electrically coupled to the board 1102. These other components include, but are not limited to, volatile memory (e.g., DRAM), non-volatile memory (e.g., ROM), flash memory, a graphics processor, a digital signal processor, a crypto processor, a chipset, an antenna, a display, a touchscreen display, a touchscreen controller, a battery, an audio codec, a video codec, a power amplifier, a global positioning system (GPS) device, a compass, an accelerometer, a gyroscope, a speaker, a camera, and a mass storage device (such as hard disk drive, compact disk (CD), digital versatile disk (DVD), and so forth). The communication chip 1106 enables wireless communications for the transfer of data to and from the computing device 1100. The term "wireless" and its derivatives may be used to describe circuits, devices, systems, methods, techniques, communications channels, etc., that may communicate data through the use of modulated electromagnetic radiation through a non- solid medium. The term does not imply that the associated devices do not contain any wires, although in some embodiments they might not. The communication chip 1106 may implement any of a number of wireless standards or protocols, including but not limited to Wi-Fi (IEEE 802.11 family), WiMAX (IEEE 802.16 family), IEEE 802.20, long term evolution (LTE), Ev- DO, HSPA+, HSD-PA+, HSUPA+, EDGE, GSM, GPRS, CDMA, TDMA, DECT, Bluetooth, derivatives thereof, as well as any other wireless protocols that are designated as 3G, 4G, 10G, and beyond. The computing device 1100 may include a plurality of communication chips 1106. For instance, a first communication chip 1106 may be dedicated to shorter range wireless communications such as Wi-Fi and Bluetooth and a second communication chip 1106 may be dedicated to longer range wireless communications such as GPS, EDGE, GPRS, CDMA, WiMAX, LTE, Ev-DO, and others. The processor 1104 of the computing device 1100 includes an integrated circuit die packaged within the processor 1104. In some implementations of the invention, the integrated circuit die of the processor includes one or more devices that are assembled in an ePLB or eWLB based P0P package that that includes a mold layer directly contacting a substrate, in accordance with implementations of the invention. The term "processor" may refer to any device or portion of a device that processes electronic data from registers and/or memory to transform that electronic data into other electronic data that may be stored in registers and/or memory. The communication chip 1106 also includes an integrated circuit die packaged within the communication chip 1106. In accordance with another implementation of the invention, the integrated circuit die of the communication chip includes one or more devices that are assembled in an ePLB or eWLB based P0P package that that includes a mold layer directly contacting a substrate, in accordance with implementations of the invention.

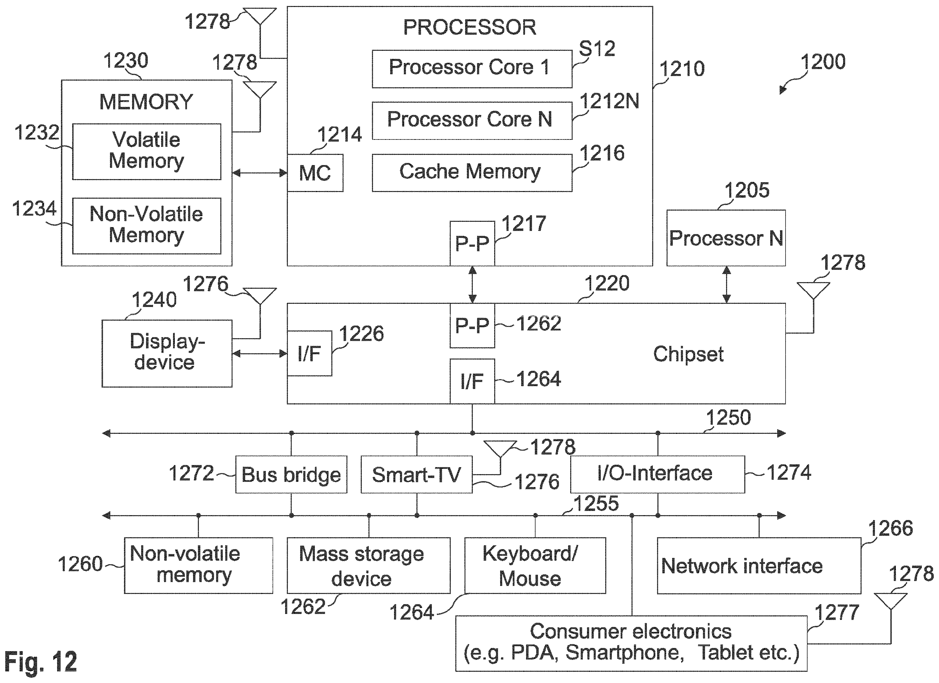

Fig. 12 is included to show an example of a higher-level device application for the disclosed embodiments. In an embodiment, a computing system 1200 includes, but is not limited to, a desktop computer. In an embodiment, a system 1200 includes, but is not limited to a laptop computer. In an embodiment, a system 1200 includes, but is not limited to a netbook. In an embodiment, a system 1200 includes, but is not limited to a tablet. In an embodiment, a system 1200 includes, but is not limited to a notebook computer. In an embodiment, a system 1200 includes, but is not limited to a personal digital assistant (PDA). In an embodiment, a system 1200 includes, but is not limited to a server. In an embodiment, a system 1200 includes, but is not limited to a workstation. In an embodiment, a system 1200 includes, but is not limited to a cellular telephone. In an embodiment, a system 1200 includes, but is not limited to a mobile computing device. In an embodiment, a system 1200 includes, but is not limited to a smart phone. In an embodiment, a system 1200 includes, but is not limited to an internet appliance.

In an embodiment, the processor 1210 has one or more processing cores 1212 and 1212N, where 1212N represents the Nth processor core inside processor 1210 where N is a positive integer. In an embodiment, the electronic device system 1200 using a MAA apparatus embodiment that includes multiple processors including 1210 and 1205, where the processor 1205 has logic similar or identical to the logic of the processor 1210. In an embodiment, the processing core 1212 includes, but is not limited to, pre-fetch logic to fetch instructions, decode logic to decode the instructions, execution logic to execute instructions and the like. In an embodiment, the processor 1210 has a cache memory 1216 to cache at least one of instructions and data for the apparatus in the system 1200. The cache memory 1216 may be organized into a hierarchal structure including one or more levels of cache memory.

In an embodiment, the processor 1210 includes a memory controller 1214, which is operable to perform functions that enable the processor 1210 to access and communicate with memory 1230 that includes at least one of a volatile memory 1232 and a non-volatile memory 1234. In an embodiment, the processor 1210 is coupled with memory 1230 and chipset 1220. The processor 1210 may also be coupled to a wireless antenna 1278 to communicate with any device configured to at least one of transmit and receive wireless signals. In an embodiment, the wireless antenna interface 1278 operates in accordance with, but is not limited to, the IEEE 802.11 standard and its related family, Home Plug AV (HPAV), Ultra Wide Band (UWB), Bluetooth, WiMax, or any form of wireless communication protocol.

In an embodiment, the volatile memory 1232 includes, but is not limited to, Synchronous Dynamic Random Access Memory (SDRAM), Dynamic Random Access Memory (DRAM), RAMBUS Dynamic Random Access Memory (RDRAM), and/or any other type of random-access memory device. The non-volatile memory 1234 includes, but is not limited to, flash memory, phase change memory (PCM), read-only memory (ROM), electrically erasable programmable read-only memory (EEPROM), or any other type of non-volatile memory device.

The memory 1230 stores information and instructions to be executed by the processor 1210. In an embodiment, the memory 1230 may also store temporary variables or other intermediate information while the processor 1210 is executing instructions. In the illustrated embodiment, the chipset 1220 connects with processor 1210 via Point-to-Point (PtP or P-P) interfaces 1217 and 1222. Either of these PtP embodiments may be achieved using a MAA apparatus embodiment as set forth in this disclosure. The chipset 1220 enables the processor 1210 to connect to other elements in the MAA apparatus embodiments in a system 1200. In an embodiment, interfaces 1217 and 1222 operate in accordance with a PtP communication protocol such as the Intel^{®} QuickPath Interconnect (QPI) or the like. In other embodiments, a different interconnect may be used.

In an embodiment, the chipset 1220 is operable to communicate with the processor 1210, 1205N, the display device 1240, and other devices 1272, 1276, 1274, 1260, 1262, 1264, 1266, 1277, etc. The chipset 1220 may also be coupled to a wireless antenna 1278 to communicate with any device configured to at least do one of transmit and receive wireless signals.

The chipset 1220 connects to the display device 1240 via the interface 1226. The display 1240 may be, for example, a liquid crystal display (LCD), a plasma display, cathode ray tube (CRT) display, or any other form of visual display device. In and embodiment, the processor 1210 and the chipset 1220 are merged into a MAA apparatus in a system. Additionally, the chipset 1220 connects to one or more buses 1250 and 1255 that interconnect various elements 1274, 1260, 1262, 1264, and 1266. Buses 1250 and 1255 may be interconnected together via a bus bridge 1272 such as at least one MAA apparatus embodiment. In an embodiment, the chipset 1220 couples with a non-volatile memory 1260, a mass storage device(s) 1262, a keyboard/mouse 1264, and a network interface 1266 by way of at least one of the interface 1224 and 1274, the smart TV 1276, and the consumer electronics 1277, etc.

In an embodiment, the mass storage device 1262 includes, but is not limited to, a solid-state drive, a hard disk drive, a universal serial bus flash memory drive, or any other form of computer data storage medium. In one embodiment, the network interface 1266 is implemented by any type of well-known network interface standard including, but not limited to, an Ethernet interface, a universal serial bus (USB) interface, a Peripheral Component Interconnect (PCI) Express interface, a wireless interface and/or any other suitable type of interface. In one embodiment, the wireless interface operates in accordance with, but is not limited to, the IEEE 802.11 standard and its related family, Home Plug AV (HPAV), Ultra Wide Band (UWB), Bluetooth, WiMax, or any form of wireless communication protocol.

While the modules shown in Fig. 12 are depicted as separate blocks within the MAA apparatus embodiment in a computing system 1200, the functions performed by some of these blocks may be integrated within a single semiconductor circuit or may be implemented using two or more separate integrated circuits. For example, although cache memory 1216 is depicted as a separate block within processor 1210, cache memory 1216 (or selected aspects of 1216) can be incorporated into the processor core 1212.

In the following, some examples of the present invention are presented:
An example (e.g., example 1) relates to a method for a client device (100), the method comprising determining (130), on a blockchain (105), a non-fungible token (NFT) specifying a firmware for the client device, with the client device being set as owner of the NFT. The method comprises managing (140) a firmware of the client device based on the firmware specified by the NFT.

Another example (e.g., example 2) relates to a previously described example (e.g., example 1) or to any of the examples described herein, further comprising that the method comprises verifying (144) an integrity of the firmware based on information included in the NFT.

Another example (e.g., example 3) relates to a previously described example (e.g., example 2) or to any of the examples described herein, further comprising that the NFT comprises a hash value or a cryptographic signature of the firmware, the method comprising verifying (144) the integrity of the firmware update based on the hash value or cryptographic signature included in the NFT.

Another example (e.g., example 4) relates to a previously described example (e.g., one of the examples 2 to 3) or to any of the examples described herein, further comprising that the NFT comprises information on a firmware management device (200) having minted the NFT, the method comprising verifying (144) the integrity of the firmware by verifying an integrity of the firmware management device having minted the NFT using the blockchain.

Another example (e.g., example 5) relates to a previously described example (e.g., one of the examples 2 to 4) or to any of the examples described herein, further comprising that the NFT specifies a firmware update, and the integrity of the firmware update is verified (144) prior to installing (146) the firmware update on the client device.

Another example (e.g., example 6) relates to a previously described example (e.g., one of the examples 2 to 5) or to any of the examples described herein, further comprising that the integrity of the firmware is verified (144) as part of a boot process of the client device.

Another example (e.g., example 7) relates to a previously described example (e.g., one of the examples 1 to 6) or to any of the examples described herein, further comprising that the method comprises requesting (120) the firmware from a firmware management device, wherein the NFT is minted by the firmware management device in response to the request.

Another example (e.g., example 8) relates to a previously described example (e.g., example 7) or to any of the examples described herein, further comprising that the act of requesting the firmware update comprises attesting (122) a firmware management device identification NFT of the firmware management device using the block chain and providing (124) a client device identification NFT of the client device to the firmware management device.

Another example (e.g., example 9) relates to a previously described example (e.g., one of the examples 7 to 8) or to any of the examples described herein, further comprising that the firmware management device is pre-defined for the client device as being allowed to provide firmware.

Another example (e.g., example 10) relates to a previously described example (e.g., one of the examples 1 to 9) or to any of the examples described herein, further comprising that the NFT specifies a firmware update, the method comprising obtaining (142) the firmware update specified by the NFT and installing (146) the firmware update on the client device.

Another example (e.g., example 11) relates to a previously described example (e.g., example 10) or to any of the examples described herein, further comprising that the client device comprises a first level firmware for managing at least one of a blockchain-based firmware update process and a blockchain-based firmware verification process, with the firmware update being installed (146) as a second level firmware in addition to the first-level firmware.

Another example (e.g., example 12) relates to a previously described example (e.g., example 11) or to any of the examples described herein, further comprising that the method comprises, for provisioning the client device for future firmware updates, providing (110) information on the first-level firmware to a firmware management device, and obtaining (115) a client device identification NFT from the firmware management device, the client device being set as owner of the client device identification NFT.

An example (e.g., example 13) relates to a method for a firmware management device (200), the method comprising obtaining (250) one or more client device identification Non-Fungible Tokens (NFTs) of one or more client devices. The method comprises minting (270) one or more NFTs specifying a firmware on a blockchain. The method comprises transferring (280) ownership of the one or more NFTs specifying a firmware to the one or more client devices based on an identity of the one or more client devices included in the one or more client device identification NFTs.

Another example (e.g., example 14) relates to a previously described example (e.g., example 13) or to any of the examples described herein, further comprising that a separate NFT is minted for each of the one or more client devices.

Another example (e.g., example 15) relates to a previously described example (e.g., one of the examples 13 to 14) or to any of the examples described herein, further comprising that the method comprises including (272) a hash value or a cryptographic signature of the firmware in the one or more NFTs specifying the firmware.

Another example (e.g., example 16) relates to a previously described example (e.g., one of the examples 13 to 15) or to any of the examples described herein, further comprising that the method comprises including (274) information on the firmware management device having minted the NFT in the one or more NFTs specifying the firmware.

Another example (e.g., example 17) relates to a previously described example (e.g., one of the examples 13 to 16) or to any of the examples described herein, further comprising that the method comprises obtaining (260) one or more requests for the firmware from the one or more client devices, wherein the one or more NFTs are minted in response to the one or more requests.

Another example (e.g., example 18) relates to a previously described example (e.g., example 17) or to any of the examples described herein, further comprising that the method comprises providing (210) a firmware management device identification NFT of the firmware management device to the one or more client devices, obtaining (250) one or more client device identification NFTs of the one or more client devices, and verifying (255) the one or more client device identification NFTs using the blockchain.

Another example (e.g., example 19) relates to a previously described example (e.g., one of the examples 13 to 18) or to any of the examples described herein, further comprising that the method comprises, for provisioning a client device for future firmware updates, obtaining (220) information on a first-level firmware from the client device to be provisioned, minting (230) a client device identification NFT for the client device to be provisioned based on the information on the first-level firmware, the client device to be provisioned being set as owner of the client device identification NFT, and providing (240) the client device identification NFT to the client device to be provisioned.

Another example (e.g., example 20) relates to a previously described example (e.g., example 19) or to any of the examples described herein, further comprising that the method comprises checking (225) an eligibility of the client device to be provisioned based on information obtained from outside the blockchain.

Another example (e.g., example 21) relates to a previously described example (e.g., one of the examples 13 to 20) or to any of the examples described herein, further comprising that the NFT specifies a firmware update.

An example (e.g., example 22) relates to an apparatus (10) for a client device (100), the apparatus comprising an interface (12), machine-readable instructions, and processor circuitry (14) to execute the machine-readable instructions to determine, on a blockchain (105), a non-fungible token (NFT) specifying a firmware for the client device, with the client device being set as owner of the NFT. The processor circuitry (14) is to execute the machine-readable instructions to manage a firmware of the client device based on the firmware specified by the NFT.

An example (e.g., example 23) relates to an apparatus (10) for a client device (100), the apparatus comprising an interface (12) for communicating with a blockchain (105). The apparatus (10) comprises machine-readable instructions. The apparatus (10) comprises processor circuitry (14) to execute the machine-readable instructions to perform the method according to one of the examples 1 to 12 (or according to any other example).

An example (e.g., example 24) relates to an apparatus (10) for a client device (100), the apparatus comprising processor circuitry configured to perform the method according to one of the examples 1 to 12 (or according to any other example).

An example (e.g., example 25) relates to a device (10) for a client device (100), the device comprising means for processing for performing the method according to one of the examples 1 to 12 (or according to any other example).

An example (e.g., example 26) relates to a client device (100) comprising an apparatus (10) or device (10) according to one of the examples 22 to 25 (or according to any other example).

An example (e.g., example 27) relates to a client device, comprising at least one interface, machine-readable instructions and processor circuitry to execute the machine-readable instructions to load a first level firmware for managing at least one of a blockchain-based firmware update process and a blockchain-based firmware verification process, and load a second level firmware in addition to the first level firmware, the second level firmware being based on at least one firmware update.

An example (e.g., example 28) relates to a client device, comprising processor circuitry configured to load a first level firmware for managing at least one of a blockchain-based firmware update process and a blockchain-based firmware verification process, and load a second level firmware in addition to the first level firmware, the second level firmware being based on at least one firmware update.

An example (e.g., example 29) relates to a client device, comprising means for processing for loading a first level firmware for managing at least one of a blockchain-based firmware update process and a blockchain-based firmware verification process, and loading a second level firmware in addition to the first level firmware, the second level firmware being based on at least one firmware update.

Another example (e.g., example 30) relates to a previously described example (e.g., one of the examples 27 to 29) or to any of the examples described herein, further comprising that the processor circuitry or means for processing is to perform the method according to one of the examples 1 to 12 (or according to any other example).

An example (e.g., example 31) relates to an apparatus (20) for a firmware management device (200), the apparatus (20) comprising an interface (22), machine-readable instructions and processor circuitry (24) to execute the machine-readable instructions to obtain one or more client device identification Non-Fungible Tokens (NFTs) of one or more client devices. The processor circuitry (24) is to execute the machine-readable instructions to mint one or more NFTs specifying a firmware on a blockchain. The processor circuitry (24) is to execute the machine-readable instructions to transfer ownership of the one or more NFTs specifying a firmware to the one or more client devices based on an identity of the one or more client devices included in the one or more client device identification NFTs.

An example (e.g., example 32) relates to an apparatus (20) for a firmware management device (200), the apparatus (20) comprising an interface (22) for communicating with a blockchain (105). The apparatus (20) comprises machine-readable instructions. The apparatus (20) comprises processor circuitry (24) to execute the machine-readable instructions to perform the method according to one of the examples 13 to 21 (or according to any other example).

An example (e.g., example 33) relates to an apparatus (20) for a firmware management device (200), the apparatus (20) comprising processor circuitry (24) configured to perform the method according to one of the examples 13 to 21 (or according to any other example).

An example (e.g., example 34) relates to a device (20) for a firmware management device (200), the device (20) comprising means for processing (24) for performing the method according to one of the examples 13 to 21.

An example (e.g., example 35) relates to a firmware management device (200) comprising an apparatus (20) or device (20) according to one of the examples 31 to 34 (or according to any other example).

An example (e.g., example 36) relates to a system comprising one or more client devices (100) comprising an apparatus (10) or device (10) according to one of the examples 22 to 25 (or according to any other example) and a firmware management device (200) comprising an apparatus (20) or device (20) according to one of the examples 31 to 34 (or according to any other example).

An example (e.g., example 37) relates to a non-transitory, computer-readable medium comprising a program code that, when the program code is executed on a processor, a computer, or a programmable hardware component, causes the processor, computer, or programmable hardware component to perform the method according to one of the examples 1 to 12 (or according to any other example) or the method according to one of the examples 13 to 21 (or according to any other example).

An example (e.g., example 38) relates to a computer system (100, 200) being configured to perform the method according to one of the examples 1 to 12 (or according to any other example) or the method according to one of the examples 13 to 21 (or according to any other example).

An example (e.g., example 39) relates to a non-transitory machine-readable storage medium including program code, when executed, to cause a machine to perform the method according to one of the examples 1 to 12 (or according to any other example) or the method according to one of the examples 13 to 21 (or according to any other example).

An example (e.g., example 40) relates to a computer program having a program code for performing the method according to one of the examples 1 to 12 (or according to any other example) or the method according to one of the examples 13 to 21 (or according to any other example) when the computer program is executed on a computer, a processor, or a programmable hardware component.

An example (e.g., example 41) relates to a machine-readable storage including machine readable instructions, when executed, to implement a method or realize an apparatus as claimed in any pending claim or shown in any example.

An example (e.g., example A1) relates to an apparatus for non-fungible token (NFT)-based firmware management according to one of examples of the specification.

An example (e.g., example A2) relates to a method for non-fungible token (NFT)-based firmware management according to one of examples of the specification.

An example (e.g., example A3) relates to a computer program for non-fungible token (NFT)-based firmware management according to one of examples of the specification.

An example (e.g., example A4) relates to a machine-readable medium including code, when executed, to cause a machine to perform any of the methods for non-fungible token (NFT)-based firmware management according to one of examples of the specification.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor, or other programmable hardware component. Thus, steps, operations, or processes of different ones of the methods described above may also be executed by programmed computers, processors, or other programmable hardware components. Examples may also cover program storage devices, such as digital data storage media, which are machine-, processor-or computer-readable and encode and/or contain machine-executable, processor-executable, or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations, or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process, or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

As used herein, the term "module" refers to logic that may be implemented in a hardware component or device, software or firmware running on a processing unit, or a combination thereof, to perform one or more operations consistent with the present disclosure. Software and firmware may be embodied as instructions and/or data stored on non-transitory computer-readable storage media. As used herein, the term "circuitry" can comprise, singly or in any combination, non-programmable (hardwired) circuitry, programmable circuitry such as processing units, state machine circuitry, and/or firmware that stores instructions executable by programmable circuitry. Modules described herein may, collectively or individually, be embodied as circuitry that forms a part of a computing system. Thus, any of the modules can be implemented as circuitry. A computing system referred to as being programmed to perform a method can be programmed to perform the method via software, hardware, firmware, or combinations thereof.

Any of the disclosed methods (or a portion thereof) can be implemented as computer-executable instructions or a computer program product. Such instructions can cause a computing system or one or more processing units capable of executing computer-executable instructions to perform any of the disclosed methods. As used herein, the term "computer" refers to any computing system or device described or mentioned herein. Thus, the term "computer-executable instruction" refers to instructions that can be executed by any computing system or device described or mentioned herein.

The computer-executable instructions can be part of, for example, an operating system of the computing system, an application stored locally to the computing system, or a remote application accessible to the computing system (e.g., via a web browser). Any of the methods described herein can be performed by computer-executable instructions performed by a single computing system or by one or more networked computing systems operating in a network environment. Computer-executable instructions and updates to the computer-executable instructions can be downloaded to a computing system from a remote server.

Further, it is to be understood that implementation of the disclosed technologies is not limited to any specific computer language or program. For instance, the disclosed technologies can be implemented by software written in C++, C#, Java, Perl, Python, JavaScript, Adobe Flash, C#, assembly language, or any other programming language. Likewise, the disclosed technologies are not limited to any particular computer system or type of hardware.

Furthermore, any of the software-based examples (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, cable (including fiber optic cable), magnetic communications, electromagnetic communications (including RF, microwave, ultrasonic, and infrared communications), electronic communications, or other such communication means.

The disclosed methods, apparatuses, and systems are not to be construed as limiting in any way. Instead, the present disclosure is directed toward all novel and nonobvious features and aspects of the various disclosed examples, alone and in various combinations and subcombinations with one another. The disclosed methods, apparatuses, and systems are not limited to any specific aspect or feature or combination thereof, nor do the disclosed examples require that any one or more specific advantages be present, or problems be solved.

Theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method for a client device (100), the method comprising:
determining (130), on a blockchain (105), a non-fungible token, NFT, specifying a firmware for the client device, with the client device being set as owner of the NFT;
managing (140) a firmware of the client device based on the firmware specified by the NFT; and
verifying (144) the integrity of the firmware specified by the NFT based on information included in the NFT as part of a boot process of the client device.

2. The method according to claim 1, wherein the NFT comprises a hash value or a cryptographic signature of the firmware, the method comprising verifying (144) the integrity of the firmware based on the hash value or cryptographic signature included in the NFT.

3. The method according to one of the claims 1 or 2, wherein the NFT comprises information on a firmware management device (200) having minted the NFT, the method comprising verifying (144) the integrity of the firmware by verifying the integrity of the firmware management device having minted the NFT using the blockchain.

4. The method according to one of the claims 1 to 3, wherein the NFT specifies a firmware update, and the integrity of the firmware update is verified (144) prior to installing (146) the firmware update on the client device.

5. The method according to one of the claims 1 to 4, wherein the method comprises requesting (120) the firmware from a firmware management device, wherein the NFT is minted by the firmware management device in response to the request.

6. The method according to claim 5, wherein the act of requesting the firmware update comprises attesting (122) a firmware management device identification NFT of the firmware management device using the blockchain and providing (124) a client device identification NFT of the client device to the firmware management device.

7. The method according to one of the claims 1 to 6, wherein the NFT specifies a firmware update, the method comprising obtaining (142) the firmware update specified by the NFT and installing (146) the firmware update on the client device.

8. The method according to claim 7, wherein the client device comprises a first level firmware for managing at least one of a blockchain-based firmware update process and a blockchain-based firmware verification process, with the firmware update being installed (146) as a second level firmware in addition to the first-level firmware.

9. A method for a firmware management device (200), the method comprising:
obtaining (250) one or more client device identification Non-Fungible Tokens, NFTs, of one or more client devices;
minting (270) one or more NFTs specifying a firmware on a blockchain; and
including (274) information on the firmware management device having minted the NFT as well as information necessary for verifying the integrity of the specified firmware in the one or more NFTs specifying the firmware; and
transferring (280) ownership of the one or more NFTs specifying a firmware to the one or more client devices based on an identity of the one or more client devices included in the one or more client device identification NFTs.

10. The method according to claim 9, wherein a separate NFT is minted for each of the one or more client devices.

11. A client device (100) comprising processing means for performing the method according to one of the claims 1 to 8.

12. A firmware management device (200) comprising processing means for performing the method according to one of the claims 9 or 10.

13. A computer program having a program code for performing the method according to one of the claims 1 to 8 or the method according to one of the claims 9 to 10 when the computer program is executed on a computer, a processor, or a programmable hardware component.

## Patentansprüche

1. Verfahren für eine Client-Vorrichtung (100), wobei das Verfahren umfasst:
Bestimmen (130), auf einer Blockchain (105), eines nichtfungiblen Tokens (NFT), das eine Firmware für die Client-Vorrichtung spezifiziert, wobei die Client-Vorrichtung als Eigentümer des NFT definiert ist;
Verwalten (140) einer Firmware der Client-Vorrichtung auf der Grundlage der durch das NFT spezifizierten Firmware;
und
Verifizieren (144) der Integrität der durch das NFT spezifizierten Firmware auf der Grundlage von Informationen, die als Teil eines Bootvorgangs der Client-Vorrichtung im NFT enthalten sind.

2. Verfahren nach Anspruch 1, wobei das NFT einen Hash-Wert oder eine kryptografische Signatur der Firmware umfasst, wobei das Verfahren das Verifizieren (144) der Integrität der Firmware auf der Grundlage des im NFT enthaltenen Hash-Werts oder der kryptografischen Signatur umfasst.

3. Verfahren nach einem der Ansprüche 1 oder 2, wobei das NFT Informationen über eine Firmware-Managementvorrichtung (200) umfasst, die das NFT geprägt hat, wobei das Verfahren das Verifizieren (144) der Integrität der Firmware umfasst, indem die Integrität der Firmware-Managementvorrichtung, die das NFT geprägt hat, unter Verwendung der Blockchain verifiziert wird.

4. Verfahren nach einem der Ansprüche 1 bis 3, wobei das NFT ein Firmware-Update spezifiziert und die Integrität des Firmware-Updates vor der Installation (146) des Firmware-Updates auf der Client-Vorrichtung verifiziert wird (144).

5. Verfahren nach einem der Ansprüche 1 bis 4, wobei das Verfahren das Anfordern (120) der Firmware von einer Firmware-Managementvorrichtung umfasst, wobei das NFT von der Firmware-Managementvorrichtung als Reaktion auf die Anforderung geprägt wird.

6. Verfahren nach Anspruch 5, wobei der Vorgang des Anforderns des Firmware-Updates das Beglaubigen (122) eines NFT zur Identifikation einer Firmware-Managementvorrichtung der Firmware-Managementvorrichtung unter Verwendung der Blockchain und das Bereitstellen (124) eines NFT zur Identifikation einer Client-Vorrichtung der Client-Vorrichtung an die Firmware-Managementvorrichtung umfasst.

7. Verfahren nach einem der Ansprüche 1 bis 6, wobei das NFT ein Firmware-Update spezifiziert, wobei das Verfahren das Erhalten (142) des durch das NFT spezifizierten Firmware-Updates und das Installieren (146) des Firmware-Updates auf der Client-Vorrichtung umfasst.

8. Verfahren nach Anspruch 7, wobei die Client-Vorrichtung eine Firmware der ersten Ebene (First Level) umfasst, um mindestens eines von einem Blockchain-basierten Firmware-Aktualisierungsprozess und einem Blockchain-basierten Firmware-Verifizierungsprozess zu verwalten, wobei die Firmware-Aktualisierung als eine Firmware der zweiten Ebene (Second Level) zusätzlich zu der Firmware der ersten Ebene installiert wird (146).

9. Verfahren für eine Firmware-Managementvorrichtung (200), wobei das Verfahren umfasst:
Erhalten (250) eines oder mehrerer nicht-fungibler Token, NFT, zur Identifikation einer Client-Vorrichtung einer oder mehrerer Client-Vorrichtungen;
Prägen (270) eines oder mehrerer NFT, die eine Firmware auf einer Blockchain spezifizieren; und
Einfügen (274) von Informationen über die Firmware-Managementvorrichtung, die das NFT geprägt hat, sowie von Informationen, die zum Verifizieren der Integrität der spezifizierten Firmware erforderlich sind, in die ein oder mehreren NFT, die die Firmware spezifizieren; und
Übertragen (280) des Eigentums an den ein oder mehreren NFT, die eine Firmware spezifizieren, an die ein oder mehreren Client-Vorrichtungen auf der Grundlage einer Identität der ein oder mehreren Client-Vorrichtungen, die in den ein oder mehreren NFT zur Identifikation einer Client-Vorrichtung enthalten sind.

10. Verfahren nach Anspruch 9, wobei ein separates NFT für jede der ein oder mehreren Client-Vorrichtungen geprägt wird.

11. Client-Vorrichtung (100), die Verarbeitungsmittel zum Durchführen des Verfahrens nach einem der Ansprüche 1 bis 8 umfasst.

12. Firmware-Managementvorrichtung (200), die Verarbeitungsmittel zum Verarbeiten (24) zum Durchführen des Verfahrens nach einem der Ansprüche 9 oder 10 umfasst.

13. Computerprogramm, das einen Programmcode aufweist zum Durchführen des Verfahrens nach einem der Ansprüche 1 bis 8 oder des Verfahrens nach einem der Ansprüche 9 bis 10, wenn das Computerprogramm auf einem Computer, einem Prozessor oder einer programmierbaren Hardwarekomponente ausgeführt wird.

## Revendications

1. Procédé pour un dispositif client (100), le procédé comprenant les étapes suivantes :
déterminer (130), sur une blockchain (105), un jeton non fongible, NFT, spécifiant un micrologiciel pour le dispositif client, le dispositif client étant défini comme propriétaire du NFT ;
gérer (140) un micrologiciel du dispositif client sur la base du micrologiciel spécifié par le NFT ; et
vérifier (144) l'intégrité du micrologiciel spécifié par le NFT sur la base d'informations incluses dans le NFT dans le cadre d'un processus d'amorçage du dispositif client.

2. Procédé selon la revendication 1, dans lequel le NFT comprend une valeur de hachage ou une signature cryptographique du micrologiciel, le procédé comprenant de vérifier (144) l'intégrité du micrologiciel sur la base de la valeur de hachage ou de la signature cryptographique incluse dans le NFT.

3. Procédé selon l'une des revendications 1 ou 2, dans lequel le NFT comprend des informations sur un dispositif de gestion de micrologiciel (200) ayant émis le NFT, le procédé comprenant la vérification (144) de l'intégrité du micrologiciel en vérifiant l'intégrité du dispositif de gestion de micrologiciel ayant émis le NFT à l'aide de la blockchain.

4. Procédé selon l'une des revendications 1 à 3, dans lequel le NFT spécifie une mise à jour de micrologiciel, et l'intégrité de la mise à jour de micrologiciel est vérifiée (144) avant d'installer (146) la mise à jour de micrologiciel sur le dispositif client.

5. Procédé selon l'une des revendications 1 à 4, dans lequel le procédé comprend de demander (120) le micrologiciel à partir d'un dispositif de gestion de micrologiciel, où le NFT est émis par le dispositif de gestion de micrologiciel en réponse à la demande.

6. Procédé selon la revendication 5, dans lequel l'étape de demande de la mise à jour de micrologiciel comprend l'attestation (122) d'un NFT d'identification de dispositif de gestion de micrologiciel NFT du dispositif de gestion de micrologiciel à l'aide de la blockchain et la fourniture (124) d'un NFT d'identification de dispositif client du dispositif client au dispositif de gestion de micrologiciel.

7. Procédé selon l'une des revendications 1 à 6, dans lequel le NFT spécifie une mise à jour de micrologiciel, le procédé comprenant l'obtention (142) de la mise à jour de micrologiciel spécifiée par le NFT et l'installation (146) de la mise à jour de micrologiciel sur le dispositif client.

8. Procédé selon la revendication 7, dans lequel le dispositif client comprend un micrologiciel de premier niveau pour gérer au moins l'un d'un processus de mise à jour de micrologiciel basé sur une blockchain et d'un processus de vérification de micrologiciel basé sur une blockchain, la mise à jour de micrologiciel étant installée (146) en tant que micrologiciel de deuxième niveau en plus du micrologiciel de premier niveau.

9. Procédé pour un dispositif de gestion de micrologiciel (200), le procédé comprenant les étapes suivantes :
obtenir (250) un ou de plusieurs jetons non fongibles, NFT, d'identification de dispositifs clients, d'un ou de plusieurs dispositifs clients ;
émettre (270) un ou plusieurs NFT spécifiant un micrologiciel sur une blockchain ; et
inclure (274) des informations sur le dispositif de gestion de micrologiciel ayant émis le NFT ainsi que des informations nécessaires pour vérifier l'intégrité du micrologiciel spécifié dans les un ou plusieurs NFT spécifiant le micrologiciel ; et
transférer (280) la propriété des un ou plusieurs NFT spécifiant un micrologiciel aux un ou plusieurs dispositifs clients sur la base d'une identité des un ou plusieurs dispositifs clients inclus dans les un ou plusieurs NFT d'identification de dispositif client.

10. Procédé selon la revendication 9, dans lequel un NFT séparé est émis pour chacun des un ou plusieurs dispositifs clients.

11. Dispositif client (100) comprenant des moyens de traitement pour exécuter le procédé selon l'une des revendications 1 à 8.

12. Dispositif de gestion de micrologiciel (200) comprenant un moyen de traitement pour traiter (24) permettant d'exécuter le procédé selon l'une des revendications 9 ou 10.

13. Programme informatique ayant un code de programme pour exécuter le procédé selon l'une des revendications 1 à 8 ou le procédé selon l'une des revendications 9 à 10, lorsque le programme informatique est en cours d'exécution sur un ordinateur, un processeur ou un composant matériel programmable.
